# EUROPÄISCHE PATENTSCHRIFT

(11) **EP 2 423 120 B1**
(45) Veröffentlichungstag und Bekanntmachung des Hinweises auf die Patenterteilung: **06.01.2021**
(21) Anmeldenummer: 11177853.6
(22) Anmeldetag: 17.08.2011
(51) Int. Cl.: B65D 65/46, B65D 1/26, B65D 3/22, B65D 1/28, B65D 25/36, B65D 81/38

(54) **Verpackungsbehälter**
Container
Récipient d'emballage

(30) Priorität: 25.08.2010 DE 202010008367 U
(43) Veröffentlichungstag der Anmeldung: 29.02.2012
(73) Patentinhaber: Paccor Deutschland GmbH, 56856 Zell (Mosel) (DE)
(72) Erfinder:
(74) Vertreter: Tilmann, Max Wilhelm

(56) Entgegenhaltungen:
- DE-A1- 2 700 230
- DE-U1- 20 300 116
- FR-A1- 2 384 677
- US-A- 2 969 901
- US-A- 4 368 818
- US-A- 4 409 053
- US-A- 5 236 749
- US-A- 5 775 577
- US-A1- 2004 112 949
- US-A1- 2005 115 975
- US-B1- 6 209 344

## Beschreibung

Die Erfindung bezieht sich auf einen Lebensmittelverpackungsbehälter mit einem Innenteil und einem Aussenteil, wobei das Innenteil ein schalen- oder becherförmiges Behältnis bildet und das Aussenteil das Innenteil wenigstens teilweise umschließt, wobei das Innenteil aus einem formbaren, d.h. thermoformbaren und/oder tiefziehbaren Material einstückig hergestellt ist, wobei als Material ein ein- oder mehrlagiges wenigstens mit einem Anteil aus recycelten Rohstoffen hergestelltes Material vorgesehen ist, wobei auch wenigstens ein Anteil aus nachwachsenden und/oder biologisch abbaubaren Rohstoffen vorgesehen sein kann und wobei das Aussenteil wenigstens den Umfang des Innenteils umschließt und aus einem nachwachsenden, biologisch abbaubaren und/oder recyceltem Rohstoff hergestellt ist, wobei vorzugsweise faserhaltige Materialien vorgesehen sein können.

Es sind verschiedene derartige Verpackungsbehälter bekannt, die jedoch allesamt sehr aufwendig gefertigt sind und/oder aus umweltproblematischen Materialien, das bedeutet oftmals aus auf Erdöl basierenden Materialien hergestellt werden müssen. Da diese sonst die erforderlichen Eigenschaften für die Verpackung von Lebensmitteln nicht aufweisen können.

Beispielsweise ist aus der DE 27 00 230A1 ein Verpackungsbehälter mit einem Innenbecher und einem Außenbecher bekannt.

Aus der FR 2 384 677A1, der US 5,775,577, der US 2005/115 975A1 und der DE 203 00 116 U1 sind Verpackungsbehälter der genannten Art bekannt.

Aufgabe der Erfindung ist es, die natürlichen Ressourcen besser zu nutzen und eine Verpackung des genannten Typs zu schaffen, die den Einsatz von umweltproblematischen Rohstoffen vermeidet oder zumindest weitestgehend verringert.

Diese Aufgabe wird erfindungsgemäß dadurch gelöst, daß im Innenteil das recycelte Material durch eine innere Schicht aus neuem Kunststoffmaterial abgedeckt ist und die Schicht aus Recyclingmaterial zusammen mit der inneren Schicht das Innenteil bildet, daß das Innenteil durch das Außenteil gehalten und versteift wird und daß das Innenteil aus einem Polymer, insbesondere aus PS, PE, PP, PET, PVC, Stärkepolymeren, Polymilchsäure oder anderen natürlichen oder künstlichen Polymeren ein- oder mehrschichtig auch in Kombination mit Barriereschichten, Lacken oder dergleichen geformt ist und wenigstens in einer Schicht einen Anteil eines recyclierten Kunststoffmaterials, vorzugsweise R-PET, R-PP oder R-PS enthält, daß wenigstens eine Kante des Außenteils abgedichtet und/oder feuchtigkeits-, flüssigkeits- und/oder fettunempfindlich ausgerüstet sein kann, wobei diese Abdichtung durch Beschichten, Abdecken und/oder Umfalten erzeugt sein kann.

Durch die Nutzung vor allem von recycelten Rohstoffen werden vorhandene Ressourcen geschont. Wenn dies, wie beansprucht noch mit der Nutzung von nachwachsenden Rohstoffen kombiniert wird, wird eine optimale Schonung der Ressourcen erzielt. Es wird eine Verpackung geschaffen, die nicht nur umweltfreundlich, sondern auch sehr stabil ist und zudem für die Verpackung von Lebensmitteln wie zum Beispiel Joghurt oder dergleichen sehr gut geeignet ist. Diese Materialien, PS, PE, PP, PET, PVC, Stärkepolymeren, Polymilchsäure oder anderen natürlichen oder künstlichen Polymeren, sind lebensmittelgeeignet und dennoch sehr umweltfreundlich. Gegen einen direkten Kontakt spricht nichts. Recycelte Materialien können auch in nicht direkt mit dem Füllgut in Kontakt kommenden Schichten angeordnet werden. Durch die Abdichtung wird verhindert, daß Feuchtigkeit, Flüssigkeit und/oder Fette und Öle in die empfindliche, und meist hygroskopische Schnittkante des Außenteils einzudringen vermag.

Dabei hat es sich als sehr vorteilhaft erwiesen, wenn das Innenteil in das Außenteil hinein tiefgezogen oder in dieses hinein geblasen ist, wobei das spätere Innenteil als flache Folie oder als Vorformling vorgesehen sein kann.

Damit wird die Verpackung auf einfache Art und Weise hergestellt und zudem eine sehr gute, aber dennoch lösbare Verbindung geschaffen.

Erfindungsgemäß ist es dabei sehr vorteilhaft, wenn das recyclierte Kunststoffmaterial aus industriellem Abfall und/oder auch aus Verbraucherabfall gewonnen ist, und wenigstens annähernd sortenrein bzw. in Mischungen vorliegt, die definierte physikalische und chemische Eigenschaften aufweisen.

Auch bei recyceltem Kunststoffmaterial spricht gerade bei industriellen Produktionsabfällen in der Regel nichts gegen einen direkten Kontakt mit dem Füllgut.

Es sind verschiedenste Anteile des recycelten Kunststoffmaterials am Gesamtmaterial denkbar.

Eine sehr vorteilhafte Weiterbildung der Erfindung liegt auch vor, wenn das Aussenteil aus einem faserhaltigen Werkstoff wie Papier, Pappe, Karton, Moulded-Fiber und/oder Polymerfilmen oder Teilen gefertigt ist und um das Innenteil herumgelegt, über dieses gestülpt ist oder als Tiefziehform für das Innenteil dienen kann.

Dieses im Allgemeinen nicht direkt mit dem Füllgut in Verbindung kommende Außenteil stabilisiert den Verpackungsbehälter und verleiht ihm eine solche Steifigkeit, daß der Behälter problemlos handhabbar ist. Dabei ist es nicht notwendig, daß das Material des Außenteils für einen direkten Kontakt mit dem Füllgut geeignet ist.

Eine weitere sehr vorteilhaft Fortbildung der Erfindung liegt auch vor, wenn das Außenteil mit dem Innenteil durch Kleben, Klemmen und/oder Rasten verbunden ist, wobei wenigstens ein Vorsprung am Innenteil vorgesehen sein kann, der in ein entsprechendes Gegenstück am Außenteil einzugreifen vermag.

Dadurch wird eine feste, aber dennoch lösbare Verbindung zwischen Innenteil und Außenteil geschaffen.

Äußerst vorteilhaft ist es erfindungsgemäß auch, wenn wenigstens im Bereich des Überganges zwischen Boden und Seitenwand eine Verstärkungsrippe vorgesehen ist, die umlaufend ausgebildet sein kann, wobei die Verstärkungsrippe nach außen gerichtet und gleichzeitig als Rastnase für das Außenteil vorgesehen sein kann.

Diese Verstärkungsrippe kann nicht nur die Widerstandsfähigkeit des Behälters verbessern. Zusätzlich wird auch der Stand des Behälters auf einer Unterlage erheblich verbessert, indem einerseits die Aufstandsfläche mit dieser Rippe vergrößert werden kann, sofern die Rippe nach außen gerichtet ist, und andererseits der Schwerpunkt des Behälters in Richtung Boden verschoben wird. Zudem kann diese Rippe als Stapelhilfe dienen, und so ein unerwünschtes Festsaugen von mehreren ineinander gestapelten Bechern ineinander verhindern. Zudem kann eine der Verstärkungsrippe entsprechende Stapelkante im inneren des Behälters vorgesehen sein, die etwas oberhalb der Verstärkungsrippe angeordnet ist und so mit dem Zusammenspiel von Stapelkante und Verstärkungsrippe die Einstecktiefe beim Stapeln von Bechern begrenzt wird. Es ist auch denkbar, daß die Verstärkungsrippe in Segmente unterteilt ist. Die Verstärkungsrippe kann auch als Anschlag für ein am Umfang angeordnetes Außenteil dienen und so ein unerwünschtes Herunterrutschen desselben verhindern.

Äußerst vorteilhaft ist es gemäß einer Weiterbildung der Erfindung auch, wenn das Außenteil mit wenigstens einer Verstärkungsrippe ausgerüstet wird, die umlaufend ausgebildet sein kann.

Damit wird die Stabilität des Außenteils erhöht. Die Materialstärken können reduziert werden. Es ist in diesem Zusammenhang auch denkbar, daß das Außenteil aus einem gewellten Material, zum Beispiel Wellpappe oder dergleichen gebildet ist und so eine sehr hohe Stabilität erfährt. Dieses gewellte Material kann dabei auch noch als Isolierung dienen und Wärmeein- und -austrag vermindern.

In diesem Zusammenhang ist es erfindungsgemäß äußerst vorteilhaft, wenn die Verstärkungsrippen von Innenteil und Außenteil aufeinander abgestimmt sind, sich aneinander abstützen und/oder gegeneinander verhaken können.

Durch aufeinander abgestimmte Verstärkungsrippen wird einerseits eine sehr gute Stabilisierung und Verstärkung des Behälters erzielt und andererseits eine sichere Verbindung zwischen Innenteil und Außenteil geschaffen.

Sehr vorteilhaft ist es gemäß einer weiteren Ausgestaltung der Erfindung auch, wenn wenigstens eine Entnahmeöffnung vorgesehen ist, die mit einem Deckel, einer Siegelfolie oder anderen Mitteln verschlossen sein kann.

Damit ist der Verpackungsbehälter sicher verschlossen.

Eine weitere sehr vorteilhafte Ausgestaltung der Erfindung liegt auch vor, wenn das Außenteil den Boden des Innenteils wenigstens teilweise bedeckt.

Dadurch wird auch der Boden verstärkt und beispielsweise sehr widerstandsfähig gegenüber Durchstoßen. Auch die Materialdicke im Bodenbereich kann reduziert werden.

Ebenfalls sehr vorteilhaft ist es erfindungsgemäß, wenn das Außenteil ausschließlich an den Seitenwänden des Innenteils angeordnet ist und einen Abstand zum Übergang zwischen Seitenwand und Boden aufweisen kann.

Hierdurch wird verhindert, daß das Außenteil von unten her Feuchtigkeit, Flüssigkeit, Fette oder Öle aufnehmen kann, wenn der Behälter auf feuchten, nassen oder anderweitig kontaminierten Untergründen gelagert oder bearbeitet wird.

Eine weitere äußerst vorteilhafte Ausgestaltung der Erfindung liegt auch vor, wenn der Verpackungsbehälter wenigstens eine Mundrolle, einen Rand oder dergleichen aufweist, die als Siegelrand ausgebildet sein können.

Hiermit kann ein Originalitätsverschluss geschaffen werden.

Im folgenden ist die Erfindung anhand mehrerer Ausführungsbeispiele veranschaulicht.

Dabei zeigen:
- Fig. 1: ein Schaubild eines erfindungsgemäßen Verpackungsbehälters mit einem Innenteil und einem Außenteil, wobei das Außenteil das Innenteil an seinem Umfang auf einem Teil der Höhe umschließt,
- Fig. 2: ein Schaubild eines weiteren Behälters bei dem das Außenteil in der Art einer Wellpappe ausgebildet ist,
- Fig. 3: ein Schaubild eines weiteren Behälters, bei dem das Außenteil das Innenteil sowohl an den Seiten als auch am Boden umschließt.

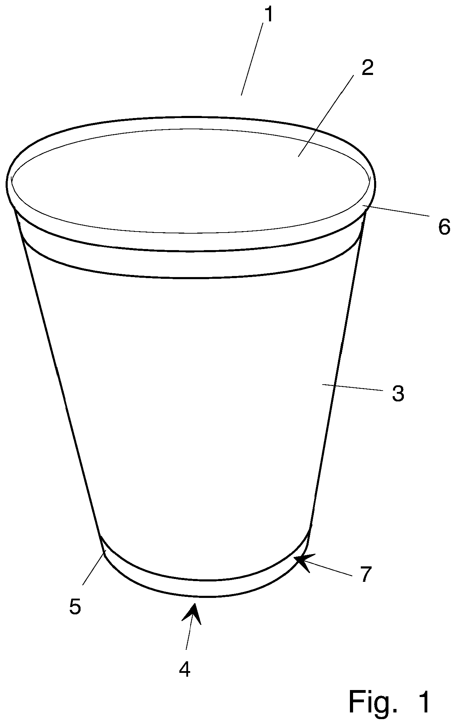

Mit 1 ist in Fig. 1 ein Becher bezeichnet, der ein Innenteil 2 und ein darum herum angeordnetes Außenteil 3 aufweist.

Das Innenteil 2 besteht dabei aus einem wenigstens annähernd runden Boden 4 und einer daran anschließenden, umlaufenden Seitenwand 5. Am vom Boden 4 abgewandten Ende der Seitenwand 5 ist ein nach außen stehender Siegelrand 6 vorgesehen.

Es ist auch denkbar, daß anstelle des Siegelrandes 6 eine Verdickung oder eine Mundrolle vorgesehen sein kann.

Sowohl auf die Verdickung als auch auf die Mundrolle kann eine Deckelfolie aufgesiegelt sein. Es ist aber auch denkbar, daß ein Schnappdeckel vorgesehen ist, der sich am Siegelrand 6, an der Verdickung und/oder an der Mundrolle abzustützen vermag und/oder hinter diese greift und sich so verriegelt.

Der Becher kann aus verschiedenen Materialien hergestellt sein, die jedoch gemäß der Erfindung vorzugsweise nachwachsend und/oder biologisch abbaubar sein sollen.

Hierfür sind Materialien wie PS, PE, PP, PET, PVC, aber auch Stärkepolymere, Polymilchsäure (PLA) oder andere Materialien ebenso denkbar, wie faserhaltige Materialien wie Papier, Pappe, Feinkarton oder dergleichen, die dann aber mit einer Resistenzschicht gegenüber dem Inhalt ausgerüstet sind.

Eine solche Resistenzschicht kann beispielsweise als Barriereschicht ausgebildet sein. Es sind aber auch Resistenzschichten denkbar, die wenigstens für eine definierte Zeitdauer Resistenzeigenschaften gegenüber dem Füllgut aufweisen. So kann beispielsweise ein beschichtetes oder imprägniertes Papier eingesetzt werden.

Als Beschichtung sind Kunststoffbeschichtungen ebenso denkbar, wie behandelte oder unbehandelte Papierlagen zum Beispiel aus Pergament, Pergamin, Pergament-Ersatz und/oder Pergaminersatz oder anderen die gewünschten Eigenschaften aufweisenden Papiere. Moulded-Fiber ist insbesondere denkbar, wenn die Oberfläche glatt ausgeführt ist.

Imprägnierungen beispielsweise auf Fettbasis sind auch denkbar.

In diesem Zusammenhang können auch mehrlagige Innenteile eingesetzt werden. Diese können einerseits eine oder mehrere Barriere- bzw. Resistenzschichten aufweisen, aber auch eine oder mehrere Tragschichten.

Als Barriereschichten sind beispielsweise auch EVOH, PA oder andere gebräuchliche Materialien mit Barriereeigenschaften denkbar. Diese können dann aber auch in extrem dünnen Schichten im Material des Innenteils 2 vorgesehen sein.

Insgesamt ist das Innenteil 2 erfindungsgemäß weich bzw. wenig steif ausgebildet. Dies kann einerseits eine Folge aus der Materialauswahl sein und andererseits eine Folge einer sehr geringen Wandstärke des Innenteils 2.

Ziel der Erfindung ist es, möglichst wenig nicht oder schlecht biologisch abbaubare und/oder nachwachsende Rohstoffe einzusetzen, aber dennoch den bekannten Komfort und die gewünschte Stabilität der Behälter zu erzeugen.

Deswegen werden die Wandstärken des Innenteils 2 reduziert und zusätzlich noch wenigstens weitgehend aus nachwachsenden und/oder biologisch abbaubaren Rohstoffen hergestellt.

Solche Rohstoffe sind jedoch sehr teuer, da diese besondere Eigenschaften vor allem im Hinblick auf Lebensmittelverträglichkeit und/oder Barriereeigenschaften aufweisen müssen. Dies ist damit ein weiterer Grund, diese Materialien möglichst sparsam einzusetzen.

Die Stabilität und Festigkeit des Innenteils 2 kann auch konstruktiv erhöht sein, indem beispielsweise am unteren Rand des Innenteils 2 ein nach außen ragender, als Wulst ausgebildeter Rand 7 angeordnet ist. Dieser Wulst 7 verstärkt einerseits den meist stark belasteten Übergang zwischen Boden 4 und Seitenwand 5 und kann zusätzlich noch für eine bessere Standfestigkeit sorgen. Durch den Wulst 7 wird nicht nur die Aufstandsfläche des Innenteils 2 vergrößert, sondern auch der Schwerpunkt des Innenteils 2 nach unten verschoben.

Der Wulst 7 kann desweiteren noch als Stapelhilfe dienen, wenn mehrere Innenteile 2 oder auch komplette Becher 1 ineinander gestapelt werden, was oftmals zum Transport leerer Becher gemacht wird.

Dabei stützt sich der Wulst 7 an der Innenseite des darunterliegenden Innenteils 2 ab und sorgt so dafür, daß die Kontaktfläche zwischen den ineinander gestapelten Bechern 1 reduziert wird.

Zusätzlich kann der Wulst 7 nicht nur umlaufend ausgebildet sein, sondern auch segmentförmig, wodurch auch noch der Zutritt von Luft beim Entstapeln der Becher 1 erleichtert wird. Bei einer segmentförmigen Ausgestaltung des Wulstes 7 muss dieser am Ende eines Segmentes nicht vollständig zurücktreten, sondern es ist auch denkbar, daß nur die Dicke des Wulstes 7 variiert.

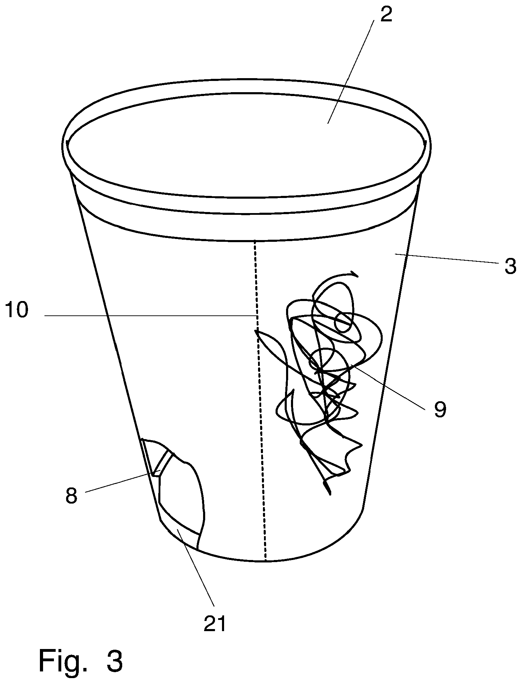

Der Wulst 7 kann auch mit einer in Fig. 3 angedeuteten Stapelkante 8 in Wechselwirkung treten, die beispielsweise als nach innen ragende Schulter im Innenteil 2 angebracht und wenigstens geringfügig oberhalb des Wulstes 7 angeordnet sein kann. Als Abstand vom Boden 4 zur Stapelkante 8 werden oftmals zwischen fünf und zehn Millimeter eingestellt.

Auch diese Stapelkante 8 verstärkt das Innenteil 2 konstruktiv.

Weitere Verstärkungsrippen sind denkbar.

Das Außenteil 3 umschließt im in Fig. 1 dargestellten Ausführungsbeispiel die Seitenwand 5 des Innenteils 2 umlaufend und bedeckt dabei einen Großteil der Höhe des Innenteils 2.

Nur am unteren Ende ist das Innenteil 2 nicht bedeckt. Der Abstand des Außenteils 3 vom Boden des Innenteils 2 beträgt dabei meist zwischen ein und fünf Millimeter.

Das Außenteil 3 ist dabei durch Kleben, Siegeln, Rasten oder dergleichen am Innenteil 2 befestigt.

Eine Verrastung kann beispielsweise dadurch erfolgen, daß das Außenteil 3 sich am Wulst 7 abstützt. Andere umlaufende oder abschnittsweise Rastmittel wie Vorsprünge oder Rippen sind denkbar. Ebenso ist es denkbar, daß nicht nur das Innenteil 2 Verstärkungsrippen oder dergleichen aufweist, sondern auch das Außenteil 3. Diese Verstärkungsrippen sollten dann aufeinander abgestimmt sein, so daß diese ineinander oder hintereinander greifen können und so eine Verrastung erzeugt wird.

Das Außenteil 3 stabilisiert und festigt die Seitenwand 5 des Innenteils 2.

Bei anderen Ausgestaltungen, wie in Fig. 3 dargestellt, kann das Außenteil 3 das Innenteil 2 auch im Bodenbereich umschließen und weist selbst einen Boden 21 auf.

Das Außenteil 3 wird im allgemeinen aus Papier, Pappe, Karton oder anderen Materialien hergestellt und kann auch aus Recyclingmaterialien bestehen. Dabei kann das Außenteil 3 auch mehrlagig ausgebildet sein. Das Außenteil 3 ist vergleichsweise unkritisch in Bezug auf Lebensmitteltauglichkeit, da das Füllgut nicht mit dem Außenteil in Kontakt kommt.

Auf der Außenseite des Außenteils 3 kann ein Druckbild 9 vorgesehen werden. Um ein hochwertiges Druckbild 9 zu erhalten, kann die Außenseite mit einem besonders glatten und gut bedruckbaren Material beschichtet sein. Es sind hier Feinpapiere ebenso denkbar, wie entsprechend ausgerüstete Kunststoffe. In diesem Zusammenhang ist es auch denkbar, daß ein Unterlack unter dem eigentlichen Druckbild vorgesehen ist.

Um Abrieb der Druckfarben und/oder eine Beschädigung des Druckbildes zu vermeiden kann auch ein Überlack oder eine Schutzbeschichtung vorgesehen sein.

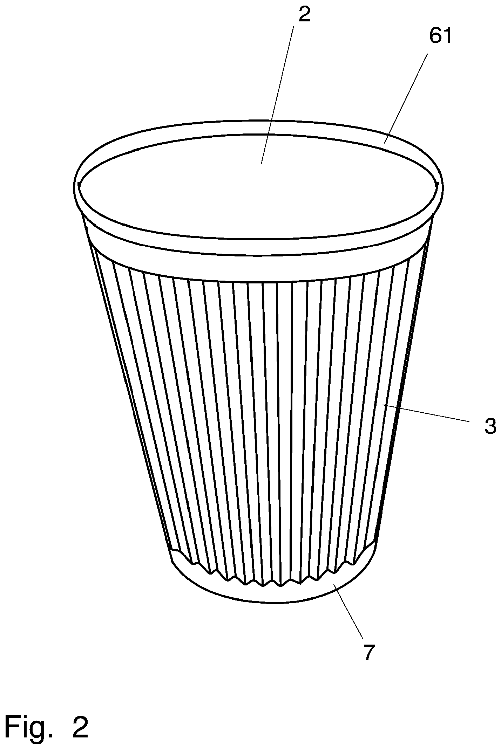

Das Außenteil 3 kann auch aus gewellten Materialien wie beispielsweise Wellpappe oder dergleichen gefertigt sein, die dann für eine sehr gute Isolierung des Bechers 1 dienen können oder wenigstens besonders angenehme taktile Eigenschaften aufweisen. Eine solche Ausgestaltung ist in Fig. 2 abgebildet.

Eine Isolierung kann auch beispielsweise durch eine geschäumte Beschichtung oder Zwischenschicht zum Beispiel auf Basis von Stärkepolymeren geschaffen werden. Es ist denkbar, daß hierzu Mikrokapsel eingesetzt werden, um eine einem vorgesehenem Profil entsprechende Verteilung zu erzeugen.

Isolierte Becher 1 eignen sich besonders für kalte oder heiße Füllgüter.

Das Außenteil 3 kann wenigstens partiell auch mit einer Schutzbeschichtung ausgerüstet sein, die diese unempfindlich gegenüber Feuchtigkeit, Flüssigkeit aber auch Fetten machen kann.

Gerade an den unteren und oberen Rändern des Außenteils 3 besteht die Gefahr, daß dort Feuchtigkeit, Flüssigkeit oder auch Fette eindringen können, da dort meistens offene Schnittkanten vorliegen.

Gerade in diesen Bereichen kann die Schutzbeschichtung vorgesehen sein. Es ist aber auch denkbar, daß die Kanten des Außenteils 3 nach innen umgefaltet sind und so die Schnittkanten geschützt werden und so das Eindringen von Feuchtigkeit, Flüssigkeit oder dergleichen vermieden wird.

In diesem Zusammenhang ist es auch denkbar, daß das Außenteil 3 durch eine entsprechende Ausrüstung wenigstens für eine definierte Zeitdauer Resistenzeigenschaften gegenüber diesen Stoffen aufweist. Dies kann beispielsweise auch durch eine Imprägnierung oder eine enstprechende Materialauswahl sichergestellt werden.

Auch ist es denkbar, daß diese Resistenzeigenschaften durch eine Bedruckung erzeugt werden.

Das Außenteil 3 kann eine Sollbruchstelle 10 aufweisen, an der sich das Außenteil 3 öffnen und vom Innenteil 2 trennen lässt.

Innenteil 2 und Außenteil 3 können dann sogar getrennt voneinander der Entsorgung zugeführt werden, obwohl dies bei einer erfindungsgemäßen Stoffauswahl nicht mehr erforderlich ist.

Anstatt eines Bechers 1 im klassischen Sinn mit einem runden Boden 4 kann auch ein eckiges Behältnis geschaffen wird.

Der Becher 1 kann auf verschiedene Arten hergestellt worden sein.

Es ist einerseits denkbar, daß das Innenteil 2 klassisch in eine Tiefziehform tiefgezogen, oder aber aus einem Vorformling geblasen wurde.

Dabei kann das Innenteil 2 direkt in das Außenteil 3 hinein tiefgezogen worden sein.

Ebenso kann das Innenteil 2 in das Außenteil 3 hinein geblasen worden sein.

In beiden Fällen erübrigt sich in den allermeisten Fällen eine zusätzliche Befestigung des Innenteils 2 am Außenteil 3, da alleine durch den weichen Kunststoff beim Tiefziehen bzw. Blasen eine sehr gute Haftung zwischen den beiden Teilen entstanden ist.

Zusätzlich kann auch eine Verrastung oder dergleichen vorgesehen werden. Es ist beispielsweise denkbar, daß wie oben ausgeführt, Ausnehmungen im Außenteil 3 vorgesehen werden, in die hinein das Innenteil geformt wird und so eine sehr stabile Verrastung erzeugt werden kann. Ebenso ist es denkbar, daß die Verrastung in umgekehrter Richtung ausgebildet ist. Dies bedeutet, daß nach innen ragende Erhebungen am Außenteil 3 vorgesehen werden, um die sich das Innenteil 2 beim Formen herumlegt und so eine mechanische Verbindung zwischen den beiden Teilen geschaffen wird.

Es ist aber auch denkbar, daß gemäß einer weiteren Ausgestaltung der Erfindung die beiden Teile getrennt gefertigt und erst anschließend zusammengefügt wurden.

Es ist dabei denkbar, daß das Außenteil 3 um das Innenteil 2 herumgelegt und an einer Seitennaht 41 in sich verklebt ist.

Um das Außenteil 3 am Innenteil 2 zu befestigen und ein ungewolltes Abrutschen zu vermeiden kann entweder eine Verrastung, ein Wulst 7 oder dergleichen vorgesehen werden. Das Außenteil 3 vermag sich an diesen Erhebungen abzustützen.

Zusätzlich oder anstatt einer solchen mechanischen Verbindung kann auch eine Klebung oder Verschweißung zwischen Innenteil 2 und Außenteil 3 vorgesehen werden.

In diesem Zusammenhang ist es auch denkbar, daß das Außenteil 3 fertig zu einem Mantel geformt, an der Seite in sich verbunden und dann über das Innenteil 2 geschoben und mit diesem verrastet wird.

Es sind auch mehrere Rippen, Erhebungen oder andere mechanisch wirkende Vorrichtungen denkbar, die sowohl am Innenteil 2 als auch am Außenteil 3 angeordnet sind und sich aneinander oder am jeweils anderen Teil abzustützen vermögen.

Wenigstens ein Teil der Schichten des Innenteils 2 können aus recycelten Rohstoffen bestehen oder diese zu einem Anteil enthalten. Denkbar sind R-PET, R-PP, R-PS, aber auch andere Rohstoffe.

Dieses recycelte Material kann aus Abfällen der industriellen Herstellung aber auch aus Haushaltsabfällen gewonnen werden.

Bei Abfällen aus der industriellen Herstellung bestehen in der Regel keine Bedenken beim Einsatz in Schichten, die direkten Kontakt mit dem Füllgut haben, da hier meistens Stanzabfälle oder dergleichen aus derselben Verpackungsherstellung eingesetzt werden.

Beim Einsatz von Recycling-Material, das nicht oder nur eingeschränkt für direkten Lebensmittelkontakt geeignet ist, kann dieses durch einen Schicht aus unbedenklichem Material abgedeckt sein.

So ist ein Aufbau denkbar, bei dem das Innenteil 2 eine innere Schicht aus einem neuen Kunststoffmaterial aufweist, auf die dann eine Schicht aus Recyclingmaterial folgt. Beide zusammen bilden das Innenteil 2. Das Innenteil 2 ist durch das Außenteil 3 gehalten und versteift.

Durch den Einsatz von Recyclingmaterialien werden Rohstoffe eingespart und so die Umwelt entlastet.

Auch lassen sich durch die Zumischung von Recyclingmaterial wenigstens in einzelnen Schichten die Eigenschaften der jeweiligen Schicht beeinflussen.

So ist es denkbar, daß durch die Zumischung von recycelten Materialien Unverträglichkeiten und damit Grenzschichteneffekte in einer Schicht erzeugt werden können, die beispielsweise zu einer Atmungsaktivität oder zu Porositäten führen. Auch die Erzeugung einer Semipermeabilität ist denkbar.

Dabei ist es dann auch denkbar, daß die Recyclingmaterialien auch in der direkt mit dem Füllgut in Kontakt stehenden Schicht angeordnet sind, wobei dann eine partielle Abdeckung dieser Schicht denkbar ist.

## Patentansprüche

1. Lebensmittelverpackungsbehälter (1) mit einem Innenteil (2) und einem Aussenteil (3), wobei das Innenteil (1) ein schalen- oder becherförmiges Behältnis bildet und das Aussenteil (3) das Innenteil (2) wenigstens teilweise umschließt, wobei das Innenteil (2) aus einem formbaren, d.h. thermoformbaren und/oder tiefziehbaren Material einstückig hergestellt ist, wobei als Material ein ein- oder mehrlagiges, wenigstens mit einem Anteil aus recycelten Rohstoffen hergestelltes Material vorgesehen ist, wobei auch wenigstens ein Anteil aus nachwachsenden und/oder biologisch abbaubaren Rohstoffen vorgesehen sein kann und daß das Aussenteil (3) wenigstens den Umfang des Innenteils (2) umschließt und aus einem nachwachsenden, biologisch abbaubaren und/oder recyceltem Rohstoff hergestellt ist, wobei vorzugsweise faserhaltige Materialien vorgesehen sein können, **dadurch gekennzeichnet, daß** im Innenteil das recycelte Material durch eine innere Schicht aus neuem Kunststoffmaterial abgedeckt ist und die Schicht aus Recyclingmaterial zusammen mit der inneren Schicht das Innenteil bildet, daß das Innenteil durch das Außenteil gehalten und versteift wird und daß das Innenteil (2) aus einem Polymer, insbesondere aus PS, PE, PP, PET, PVC, Stärkepolymeren, Polymilchsäure oder anderen natürlichen oder künstlichen Polymeren ein- oder mehrschichtig auch in Kombination mit Barriereschichten, Lacken oder dergleichen geformt ist und wenigstens in einer Schicht einen Anteil eines recyclierten Kunststoffmaterials, vorzugsweise R-PET, R-PP oder R-PS enthält daß wenigstens eine Kante des Außenteils (3) abgedichtet und/oder feuchtigkeits-, flüssigkeits- und/oder fettunempfindlich ausgerüstet sein kann, wobei diese Abdichtung durch Beschichten, Abdecken und/oder Umfalten erzeugt sein kann.

2. Verpackungsbehälter nach Anspruch 1, **dadurch gekennzeichnet, daß** das Innenteil (2) in das Außenteil (3) hinein tiefgezogen oder in dieses hinein geblasen ist, wobei das spätere Innenteil (2) als flache Folie oder als Vorformling vorgesehen sein kann.

3. Verpackungsbehälter nach Anspruch 1 oder 2, **dadurch gekennzeichnet, daß** das recyclierte Kunststoffmaterial aus industriellem Abfall und/oder auch aus Verbraucherabfall gewonnen ist, und wenigstens annähernd sortenrein bzw. in Mischungen vorliegt, die definierte physikalische und chemische Eigenschaften aufweisen.

4. Verpackungsbehälter nach nach einem der vorangehenden Ansprüche, **dadurch gekennzeichnet, daß** das Aussenteil (3) aus einem faserhaltigen Werkstoff wie Papier, Pappe, Karton, Moulded-Fiber und/oder Polymerfilmen oder Teilen gefertigt ist und um das Innenteil (2) herumgelegt, über dieses gestülpt ist oder als Tiefziehform für das Innenteil (2) dienen kann.

5. Verpackungsbehälter nach einem der vorangehenden Ansprüche, **dadurch gekennzeichnet, daß** das Außenteil (3) mit dem Innenteil (2) durch Kleben, Klemmen und/oder Rasten verbunden ist, wobei wenigstens ein Vorsprung (7) am Innenteil (2) vorgesehen sein kann, der in ein entsprechendes Gegenstück am Außenteil (3) einzugreifen vermag.

6. Verpackungsbehälter nach einem der vorangehenden Ansprüche, **dadurch gekennzeichnet, daß** wenigstens im Bereich des Überganges zwischen Boden (4) und Seitenwand (5) eine Verstärkungsrippe (7) vorgesehen ist, die umlaufend ausgebildet sein kann, wobei die Verstärkungsrippe (7) nach außen gerichtet und gleichzeitig als Rastnase für das Außenteil (3) vorgesehen sein kann.

7. Verpackungsbehälter nach einem der vorangehenden Ansprüche, **dadurch gekennzeichnet, daß** das Außenteil (3) mit wenigstens einer Verstärkungsrippe ausgerüstet wird, die umlaufend ausgebildet sein kann.

8. Verpackungsbehälter nach einem der vorangehenden Ansprüche, **dadurch gekennzeichnet, daß** die Verstärkungsrippen von Innenteil (2) und Außenteil (3) aufeinander abgestimmt sind, sich aneinander abstützen und/oder gegeneinander verhaken können.

9. Verpackungsbehälter nach einem der vorangehenden Ansprüche, **dadurch gekennzeichnet, daß** wenigstens eine Entnahmeöffnung vorgesehen ist, die mit einem Deckel, einer Siegelfolie oder anderen Mitteln verschlossen sein kann.

10. Verpackungsbehälter nach einem der vorangehenden Ansprüche, **dadurch gekennzeichnet, daß** das Außenteil (3) den Boden (4) des Innenteils (2) wenigstens teilweise bedeckt.

11. Verpackungsbehälter nach einem der Ansprüche 1 bis 13, **dadurch gekennzeichnet, daß** das Außenteil (3) ausschließlich an den Seitenwänden (5) des Innenteils (2) angeordnet ist und einen Abstand zum Übergang zwischen Seitenwand (5) und Boden (4) aufweisen kann.

12. Verpackungsbehälter nach einem der vorangehenden Ansprüche, **dadurch gekennzeichnet, daß** der Verpackungsbehälter (1) wenigstens eine Mundrolle (6, 61), einen Rand oder dergleichen aufweist, die als Siegelrand ausgebildet sein können.

## Claims

1. Foodstuffs packaging container (1) with an inner part (2) and an outer part (3), wherein the inner part (1) forms a shell-shaped or mug-shaped container and the outer part (3) at least partially envelopes the inner part (2) wherein the inner part (2) is produced in one piece from a mouldable, i.e. thermomouldable and/or deep-drawable material, wherein the material for this is provided from a single or multi-layered material containing at least a proportion of recycled raw materials, wherein at least one proportion can be provided from renewable and/or biodegradable materials and that the outer part (3) encompasses at least the circumference of the inner part (2) and is produced from a renewable and/or biodegradable and/or recyclable material, wherein preferably fibrous materials can be provided, **characterised in that** in the inner part, the recycled material is covered with an inner layer of new plastic material and the layer of recycled material together with the inner layer form the inner part, that the inner part is retained and reinforced by the outer part and that the inner part (2) is formed from a polymer, comprising, in particular, PS, PE, PP, PET, PVC, starch polymers, polylactic acids or other natural or synthetic polymers in single or multi-layered layers as well as in combination with barrier layers, lacquers or similar and, at least in one layer, a proportion of a recycled plastic material, containing preferably R-PET, R-PP or R-PS such that at least one edge of the outer part (3) can be sealed and/or be protected so that it can be impervious to moisture, liquid, and/or grease wherein this sealing can be created by layering, coating and/or folding over.

2. Packaging container according to claim 1, **characterised in that** the inner part (2) is deep-drawn into the outer part (3) or is blown into it, wherein the later inner part (2) can be provided as a flat piece of foil or as a preform.

3. Packaging container according to claim 1 or 2, **characterised in that** the recycled plastic material is recovered from industrial waste and/or also from consumer waste, and is at least sorted approximately into categories or is present in mixtures which have defined and chemical properties.

4. Packaging container according to any one of the preceding claims, **characterised in that** the outer part (3) is made out of a fibrous substance like paper, paperboard, cardboard, moulded fibre and/or polymer films or parts and, in order to surround the inner part (2), is placed over it or can serve as a deep-drawing cavity for the inner part (2).

5. Packaging container according to any one of the preceding claims, **characterised in that** the outer part (3) is attached to the inner part (2) by gluing, clamping and/or snapping, wherein at least one projection (7) can be provided on the inner part (2) which enables it to engage with a corresponding opposing element on the outer part (3).

6. Packaging container according to any one of the preceding claims, **characterised in that** at least one area of the transition between base (4) and side wall (5) can be provided with a reinforcement rib (7) which can be formed peripherally, wherein the reinforcement rib (7) can be provided to point outwards and, at the same time, can be provided as a snap-in tab for the outer part (3).

7. Packaging container according to any one of the preceding claims, **characterised in that** the outer part (3) is equipped with at least one reinforcing rib which can be shaped circumferentially.

8. Packaging container according to any one of the preceding claims, **characterised in that** the reinforcing ribs of the inner part (2) and outer part (3) can be matched to each other such that they co-ordinate with each other and/or interlock with each other.

9. Packaging container according to any one of the preceding claims, **characterised in that** at least one removal opening is provided which can be closed with a cover, sealing film or by some other means.

10. Packaging container according to any one of the preceding claims, **characterised in that** the outer part (3) at least partly covers the base (4) of the inner part (2).

11. Packaging container according to any one of claims 1 to 13, **characterised in that** the outer part (3) is arranged only on the side walls (5) of the inner part (2) and there can be a gap at the transition between side wall (5) and base (4).

12. Packaging container according to any one of the preceding claims, **characterised in that** the packaging container (1) has at least one lip rim (6, 61), an edge or similar, which can be formed as a sealing edge.

## Revendications

1. Récipient d'emballage pour produits alimentaires (1) avec une partie intérieure (2) et une partie extérieure (3), la partie intérieure (1) formant un récipient en coupelle ou en gobelet et la partie extérieure (3) entourant au moins partiellement la partie intérieure (2), la partie intérieure (2) étant fabriquée en une seule pièce à partir d'un matériau formable, c'est-à-dire thermoformable et / ou pouvant être embouti en profondeur, un matériau en une ou en plusieurs couches, fabriqué au moins pour une part à partir de matières premières recyclées étant prévu en tant que matériau, au moins une part de matières premières renouvelables et / ou biodégradables pouvant également être prévue, et que la partie extérieure (3) entoure au moins la périphérie de la partie intérieure (2) et est fabriquée à partir d'une matière première renouvelable, biodégradable et / ou recyclée, des matériaux fibreux pouvant être prévus de préférence, **caractérisé en ce que** le matériau recyclé dans la partie intérieure est recouvert par une couche intérieure en matériau plastique neuf et que la couche en matériau recyclable forme la partie intérieure avec la couche intérieure, que la partie intérieure est maintenue et rigidifiée par la partie extérieure et que la partie intérieure (2) est formée en une ou plusieurs couches à partir d'un polymère, en particulier à partir de PS, PE, PP, PET, PVC, polymères d'amidon, acide polylactique ou d'autres polymères naturels ou synthétiques, également en combinaison avec des couches de barrière, des vernis ou similaire et contient une part de matériau plastique recyclé, de préférence du R-PET, R-PP ou R-PS, au moins dans une couche pour permettre à sceller et / ou à rendre insensible à l'humidité, aux liquides et / ou aux graisses au moins un bord de la partie extérieure (3), ce scellage pouvant être créé par le revêtement, l'enrobage et / ou le pliage.

2. Récipient d'emballage selon la revendication 1, **caractérisé en ce que** la partie intérieure (2) est emboutie en profondeur dans la partie extérieure (3) ou y est soufflée, la partie intérieure (2) ultérieure pouvant être prévue sous forme d'un fil plat ou d'une préforme.

3. Récipient d'emballage selon la revendication 1 ou 2, **caractérisé en ce que** le matériau plastique recyclé est obtenu à partir des déchets industriels et / ou à partir des déchets de post-consommation et a été recyclé séparément au moins approximativement ou est composé de mélanges présentant les propriétés physiques et chimiques définies.

4. Récipient d'emballage selon l'une quelconque des revendications précédentes, **caractérisé en ce que** la partie extérieure (3) est fabriquée à partir d'un matériau contenant des fibres, comme le papier, le carton, la cellulose moulée et / ou des films polymères, ou de leurs parties, et entoure la partie intérieure (2), y est enfoncé ou peut servir de forme d'emboutissage pour la forme intérieure (2).

5. Récipient d'emballage selon l'une quelconque des revendications précédentes, **caractérisé en ce que** la partie extérieure (3) est reliée à la partie intérieure (2) par collage, serrage et / ou encliquetage, au moins une protubérance (7) pouvant être prévue sur la partie intérieure (2), capable d'engrener dans un élément complémentaire sur la partie extérieure (3).

6. Récipient d'emballage selon l'une quelconque des revendications précédentes, **caractérisé en ce qu'**au moins dans la zone de passage entre le fond (4) et la paroi latérale (5), une nervure de renforcement (7) est prévue, pouvant être réalisée sur tout le pourtour, la nervure de renforcement (7) pouvant être dirigée vers l'extérieur et être prévue en même temps comme l'ergot d'encliquetage pour la partie extérieure (3).

7. Récipient d'emballage selon l'une quelconque des revendications précédentes, **caractérisé en ce que** la partie extérieure (3) est munie au moins d'une nervure de renforcement pouvant être réalisée sur tout le pourtour.

8. Récipient d'emballage selon l'une quelconque des revendications précédentes, **caractérisé en ce que** les nervures de renforcement de la partie intérieure (2) et de la partie extérieure (3) soient ajustées entre elles, peuvent s'appuyer l'une contre l'autre et / ou s'accrocher l'une à l'autre.

9. Récipient d'emballage selon l'une quelconque des revendications précédentes, **caractérisé en ce qu'**au moins un orifice de déversement est prévu pouvant être fermé par un couvercle, un film de scellage ou d'autres moyens.

10. Récipient d'emballage selon l'une quelconque des revendications précédentes, **caractérisé en ce que** la partie extérieure (3) recouvre au moins partiellement le fond (4) de la partie intérieure (2).

11. Récipient d'emballage selon l'une des revendications de 1 à 13, **caractérisé en ce que** la partie extérieure (3) est disposée exclusivement sur les parois latérales (5) de la partie intérieure (2) et peut présenter un espacement pour le passage entre la paroi latérale (5) et le fond (4).

12. Récipient d'emballage selon l'une quelconque des revendications précédentes, **caractérisé en ce que** le récipient d'emballage (1) présente au moins une embouchure arrondie (6, 61), un bord ou similaire pouvant être réalisés comme bord de scellage.
